# EUROPEAN PATENT SPECIFICATION

(11) **EP 1 035 534 B1**
(45) Date of publication and mention of the grant of the patent: **26.10.2005**
(21) Application number: 97936898.2
(22) Date of filing: 18.08.1997
(51) Int. Cl.: G09F 3/03

(54) **WIRE SEAL**
KABELSIEGEL
SCELLE A FILIN

(43) Date of publication of application: 13.09.2000
(73) Proprietor: Zakrytoye Aktsionernoye obshchestvo "Inzhenerny Promyshlenny Kontsern 'Strazh'", Moskow 119021 (RU)
(72) Inventor: KRYLOV, Viktor Vladimirovich, Moscow, 109057 (RU); NIKITIN, Igor Sergeevich, Moscow, 115551 (RU); SINITSYN, Vladimir Mikhailovich, Moscow, 121019 (RU)
(74) Representative: Einsel, Martin
(86) International application number: PCT/RU1997/000260
(87) International publication number: WO 1999/009541

(56) References cited:
- EP-A1- 0 223 108
- SU-A1- 1 193 331
- US-A- 3 994 521
- US-A- 4 681 356

## Description

### FIELD OF THE INVENTION

The present invention relates to closing devices used for protecting the doors of containers, railway wagons and caravans against the intrusion of unauthorized persons or criminals.

### BACKGROUND OF THE INVENTION

A cable seal is known, comprising a body with an axial opening for a cable, at one end of which a plug is attached for limiting its displacement, spring-loaded balls co-operating with the cable and located in chambers with inclined walls, wherein said chambers are formed in the walls of the body and communicate with the axial opening (US No 3994521, Cl. B 65 D 55/06, 1976).

The said seal has insufficient resistance to unsanctioned opening.

### SUUMARY OF THE PRESENT INVENTION

The task of the present invention consists in creating a seal enabled to resist to unsanctioned opening.

The technical result of the invention is to increase the reliability of the seal. Said technical result is achieved by that the body of the seal has a conical shape and comprises a cover on the side of its smaller diameter, said cover having a profiled opening that conforms to the shape of the cable in order to prevent rotation of the body relative to said cable, and a stepped opening is formed within the body under said cover, in said opening a ring is fitted for interaction with said spring-loaded balls, besides said ring is made of a material softer than that used for the balls.

### BRIEF DESCRIPTION OF THE DRAWING FIGURES

The invention is illustrated by the following drawings.

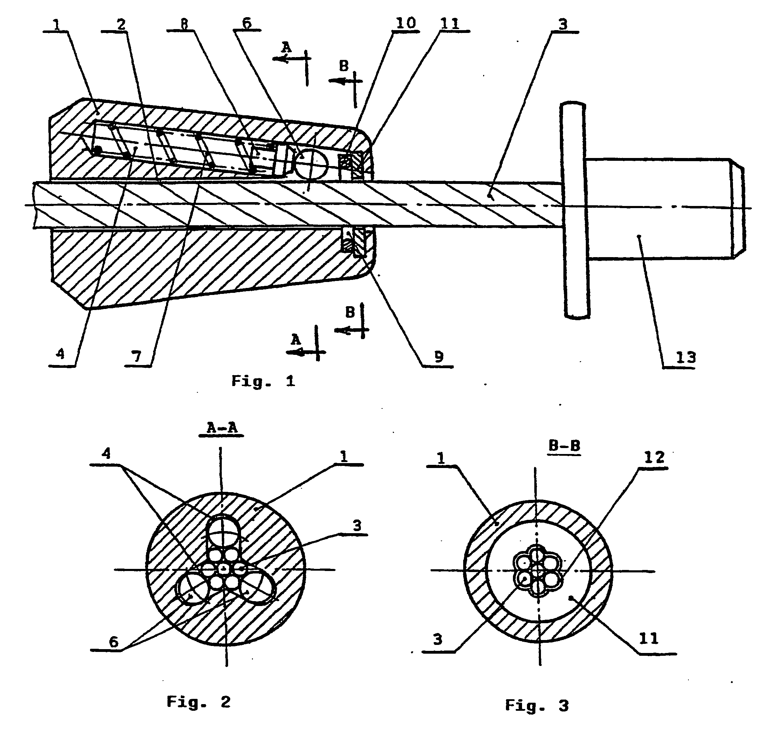

Figure 1 shows the cable seal in a final assembled position.
Figure 2 is a view along the section line A-A of Figure 1.
Figure 3 is a view along the section line B-B of Figure 1.

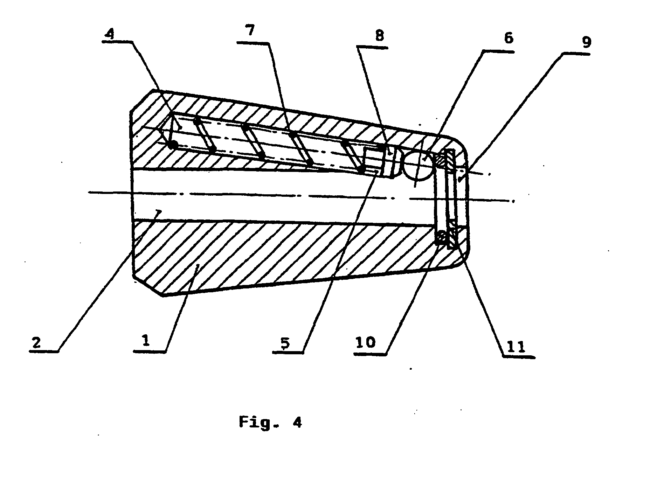

Figure 4 shows the body in a preliminary assembled position.

### DESCRIPTION OF THE PREFERRED EMBODIMENT

The cable seal comprises a body 1 of a conical shape with the central axial opening 2, the cable 3 is placed therein. Chambers 4 are formed in the walls of the body 1 (not less than 3 in number), said chambers 4 communicate with the axial opening 2 and have inclined walls. The chambers 4 form cam slots 5 in the place of communicating with the axial opening 2, said cam slots 5 widen towards the smaller diameter of the body 1. The balls 6, co-operating with the cable 3, are located in chambers 4, constituting blind inclined holes.

Along with the balls 6 springs 7 with pushers 8 are located in the chambers 4. The body 1 is closed with a cover 11 on the side of its smaller diameter, said cover 11 having a central profiled opening 12 that conforms to the shape of the cable 3. The cover 11 is rolled by the elements of the body 1. At one end of the cable a plug 13 is attached which prevents free passing of the cable 3 through the body 1 of the seal.

For the purpose to fix the balls 6 in chambers 4 in the preliminary assembled position (i.e. when the cable 3 is not placed in the opening 2), a stepped opening 9 is formed within the body 1 on the side of its smaller diameter, said opening 9 communicate with the slots 5. In the stepped opening 9 a ring 10 is fitted, closed from outside by the cover 11. Owing to the fact, that the ring 10 is made of a materiel softer than that used for the balls 6, when trying to extract the cable 3 from body 1 by force, the balls 6 deform the ring 10, deepening into the slots 5 of the axial opening 2 and fastening the cable 3 even stronger.

### INDUSTRIAL USAGE

To install the seal on the locking assembly of a container, a railway wagon and so on, the free end of the cable 3 is put into its lugs and then the body 1 is put on the said end on the side of the smaller diameter of the body 1. While passing through the axial opening 2 of the body 1 the cable 3 pushes the balls 6, which compress the springs 7 by the pushers 8 and lift from the axial opening 2 to the chambers 4, letting the cable 3 pass. In the final assembled position the balls 6 are located between the strands of the cable 3. While trying to extract the cable 3 from the body 1 by force, the cable 3 captures the balls 6, which under the action of friction forces move towards the axial opening 8 and lock the cable 3. The more the force applied to the seal, the stronger the cable 3 is locked by the balls 6.

To take off the cable seal from the locking assembly the plug 13 or the cable 3 is bit through by special tongs.

## Claims

1. A cable seal, comprising: a body (1) with an axial opening for a cable (3), with a plug (13) attached at one end of the cable (3) for limiting its displacement, spring-loaded balls (6, 7) co-operating with the cable (3) and located in chambers with walls inclined with respect to the cable axis, wherein said chambers are formed in the walls of the body (1) and communicate with the axial opening, **characterized in that** the body of the seal (1) has a conical shape and comprises a cover (11) on the side of its smaller diameter, said cover having a profiled opening (12) that conforms to the shape of the cable (3) in order to prevent rotation of the body (1) relative to said cable (3), and a stepped opening (9) formed within the body behind said cover (11), in which opening (9) a ring (10) is fitted for interaction with said spring-loaded balls (6, 7) whereby said ring (10) is made of a material softer than that used for the balls (6).

2. A cable seal according to claim 1,
**characterized in**
**that** the body (1) of the seal having a conical shape has the form of a truncated cone.

## Patentansprüche

1. Kabelsiegel mit einem Körper (1) mit einer axialen Öffnung für ein Kabel (3) mit einem Stecker (13), der an einem Ende des Kabels (3) zur Begrenzung von dessen Verschiebung angebracht ist, mit federbelasteten Kugeln (6, 7), die mit dem Kabel (3) zusammen wirken und in Kammern mit Wänden angeordnet sind, die hinsichtlich der Achse des Kabels angeschrägt sind, wobei die Kammern in den Wänden des Körpers (1) ausgebildet sind und mit der axialen Öffnung in Verbindung stehen,
**dadurch gekennzeichnet,**
**dass** der Körper des Siegels (1) eine konische Form besitzt und eine Abdeckung (11) auf der Seite mit dem schmaleren Durchmesser aufweist, wobei die Abdeckung eine profilierte Öffnung (12) besitzt, die mit der Form des Kabels (3) übereinstimmt, um eine Drehung des Körpers (1) relativ zu dem Kabel (3) zu unterbinden, und eine stufenförmige Öffnung (9), die innerhalb des Körpers hinter der Abdeckung (11) ausgebildet ist, in welcher Öffnung (9) ein Ring (10) zur Zusammenwirkung mit den federbelasteten Kugeln (6, 7) eingepasst ist, wobei der Ring (10) aus einem Material besteht, das weicher ist, als das für die Kugeln (6) verwendete.

2. Kabelsiegel nach Anspruch 1,
**dadurch gekennzeichnet,**
**dass** der Körper (1) des Siegels mit der konischen Form die Form eines Kegelstumpfes besitzt.

## Revendications

1. Presse-étoupe de câble, comprenant : un corps (1) avec une ouverture axiale permettant le passage d'un câble (3), avec une broche (13) attachée à une extrémité du câble (3) pour limiter son déplacement, des billes chargées par ressort (6, 7) coopérant avec le câble (3) et situées dans des chambres dont les parois sont inclinées par rapport à l'axe du câble, dans lequel lesdites chambres sont formées dans les parois du corps (1) et communiquent avec l'ouverture axiale, **caractérisé en ce que** le corps du presse-étoupe (1) a une forme conique et comprend un couvercle (11) du côté de son plus petit diamètre, ledit couvercle ayant une ouverture profilée (12) qui reprend la forme du câble (3) afin d'empêcher la rotation du corps (1) par rapport audit câble (3), et une ouverture en gradin (9) formée dans le corps derrière ledit couvercle (11), ouverture (9) dans laquelle une bague (10) est prévue pour interagir avec lesdites billes chargées par ressort (6, 7), ladite bague (10) étant fabriquée en un matériau plus souple que celui utilisé pour les billes (6).

2. Presse-étoupe de câble selon la revendication 1, **caractérisé en ce que** le corps (1) du presse-étoupe ayant une forme conique a la forme d'un cône tronqué.
